# EUROPÄISCHE PATENTSCHRIFT

(11) **EP 1 974 956 B1**
(45) Veröffentlichungstag und Bekanntmachung des Hinweises auf die Patenterteilung: **07.10.2009**
(21) Anmeldenummer: 08150858.2
(22) Anmeldetag: 31.01.2008
(51) Int. Cl.: B60C 11/12

(54) **Fahrzeugluftreifen**
Pneumatic tyres for a vehicle
Pneus de véhicule

(30) Priorität: 28.03.2007 DE 102007014777
(43) Veröffentlichungstag der Anmeldung: 01.10.2008
(73) Patentinhaber: Continental Aktiengesellschaft, 30165 Hannover (DE)
(72) Erfinder: Seng, Matthias, 30449, Hannover (DE)
(74) Vertreter: Finger, Karsten

(56) Entgegenhaltungen:
- EP-A- 0 952 011
- EP-A- 1 108 566
- EP-A- 1 277 599
- EP-A- 1 669 217
- EP-A- 1 669 218
- JP-A- 2001 063 322
- JP-A- 2004 314 758
- US-A1- 2006 016 533

## Beschreibung

Die Erfindung betrifft einen Fahrzeugluftreifen mit einem Laufstreifen mit Profilelementen mit jeweils zumindest einem, im Wesentlichen in Querrichtung verlaufenden Einschnitt, welcher in Draufsicht eine Kombination aus einem gerade verlaufenden Abschnitt mit zumindest einem in Draufsicht bogenförmig verlaufenden Abschnitt aufweist, wobei sich der Verlauf des Einschnittes in radialer Richtung, in Abhängigkeit vom Abstand zur Peripherie des Laufstreifens, ändert.

Fahrzeugluftreifen mit derartigen Laufstreifen sind in unterschiedlichen Varianten aus der einschlägigen Patentliteratur bekannt. So ist beispielsweise in der DE-A-10 2005 029 873 ein Fahrzeugluftreifen mit einem Laufstreifenprofil beschrieben, welcher Profilelemente mit Einschnitten aufweist, welche in radialer Richtung drei Abschnitte, einen Oberflächenabschnitt, einen Zwischenabschnitt und einen Bodenabschnitt, aufweisen. Der Bodenabschnitt und der Oberflächenabschnitt weisen eine Wellenform auf, wobei sich Bergabschnitte und Talabschnitte der wellenförmigen Form in zum Profil vertikalen Richtungen erstrecken. Der Zwischenabschnitt ist auf eine wellenförmige Weise geöffnet, wodurch sich die Bergabschnitte und die Talabschnitte der wellenförmigen Form auf eine zickzack-ähnliche Weise erstrecken. Durch diese besondere Ausgestaltung der Einschnitte soll auch bei fortschreitendem Abrieb die Blocksteifigkeit nicht beeinträchtigt werden, die Bodenkontaktfläche der Blöcke aufrechterhalten bleiben und die Kantenwirkung der Einschnitte erhalten werden.

Die EP-B-0 952 011 betrifft einen Fahrzeugluftreifen mit einem Laufstreifen mit Einschnitten in Profilblöcken, die in Draufsicht zickzack-förmig verlaufen und sich in radialer Richtung aus mehreren Abschnitten zusammensetzen, wobei zumindest zwei dieser Abschnitte in der Umfangsrichtung des Profilblockes gegeneinander versetzt sind. Bezüglich einer in Querrichtung betrachteten Zentrumslinie des Profilblockes ist dieser Versatz der Abschnitte der Einschnitte auf der einen Seite der Zentrumslinie zu jenen Einschnitten auf der anderen Seite der Zentrumslinie symmetrisch. Damit soll gewährleistet sein, dass mit zunehmendem Abrieb die Haftungseigenschaften des Reifens am Untergrund und die Steifigkeit der Profilblöcke erhalten bleiben, sodass auch gute Griffeigenschaften auf nassen Fahrbahnen gewährleistet sind sowie das Verhalten des Reifens beim Beschleunigen und Bremsen mit zunehmendem Abrieb zufriedenstellend bleibt.

Die bekannten Einschnittausgestaltungen haben daher zum Ziel, eine Versteifung der Profilelemente vor Allem in Umfangsrichtung des Reifens durch entsprechende Abstützungsmöglichkeiten der Wände der Einschnitte bei Umfangskräften sicherzustellen.

Der Erfindung liegt die Aufgabe zu Grunde, Einschnitte in Laufstreifen der eingangs genannten Art derart auszuführen, dass sie die Umfangssteifigkeit der Profilelemente nicht bzw. nicht nennenswert erhöhen, jedoch bei in Querrichtung wirkenden Kräften die Quersteifigkeit der Profilelemente erhalten bleibt.

Gelöst wird die gestellte Aufgabe erfindungsgemäß dadurch, dass der bogenförmige Abschnitt in radialer Richtung einen zweifach geknickten Verlauf mit drei Abschnitten aufweist, von welchen der erste und der dritte zumindest im Wesentlichen in radialer Richtung verlaufen und über den zwischen ihnen verlaufenden Verbindungsabschnitt lediglich in der Erstreckungsrichtung des Einschnittes gegeneinander versetzt sind.

Durch die spezielle Ausgestaltung des bogenförmigen Abschnittes in seiner radialen Erstreckung erfolgt eine gegenseitige Abstützung des den Einschnitt begrenzenden Gummis des Profilelements im Verbindungsabschnitt, zwischen den Knickstellen, sobald eine Querkraft auf das Profilelement entgegen der Versatzrichtung der Radialabschnitte - vom radial äußeren Radialabschnitt betrachtet - wirkt.

Gemäß einer bevorzugten Ausführungsform weist der Einschnitt zumindest einen weiteren erfindungsgemäß ausgeführten bogenförmigen Abschnitt auf, welcher in einem Abstand von einem anderen bogenförmigen Abschnitt vorgesehen ist. Bei diesem weiteren Abschnitt sind die Radialabschnitte entgegen zu den Radialabschnitten des anderen bogenförmigen Abschnittes versetzt. Durch diese Ausführung wird sichergestellt, dass das Profilelement unabhängig von der Richtung der wirkenden Querkräfte quersteif bleibt. Von besonderem Vorteil ist die Erfindung für jene Eigenschaften des Laufstreifens, für die eine höhere Quersteifigkeit günstig ist. Dazu zählen die Handlingeigenschaften, die Aquaplaningeigenschaften in Querrichtung und das Verhalten des Reifens bei Kurven- bzw. Kreisfahrt. Die Einschnitte werden zudem vorzugsweise derart ausgeführt, dass in Umfangsrichtung keine oder möglichst geringe Abstützflächen vorhanden sind, sodass erfindungsgemäß ausgeführte Reifen gute Griffeigenschaften auf winterlichen Fahrbahnen aufweisen.

Eine weitere besondere Ausführung der Einschnitte, durch welche der Abstützungseffekt in seitlicher Richtung zur Erhöhung der Quersteifigkeit unterstützt wird, besteht darin, dass, in Draufsicht betrachtet, die Bögen von zwei in der Erstreckungsrichtung des Einschnittes betrachtet voneinander beabstandeten Abschnitten in entgegengesetzte Umfangsrichtungen weisen.

Besonders vorteilhaft für die Quersteifigkeit von Profilelementen in Laufstreifen sind Ausführungen, bei welchen die Einschnitte jeweils zumindest eine Gruppe aus mindestens zwei, in Draufsicht bogenförmigen Abschnitten aufweisen, wobei die bogenförmigen Abschnitte innerhalb einer Gruppe in Erstreckungsrichtung des Einschnittes unmittelbar aneinander anschließen und in radialer Richtung übereinstimmend verlaufen. In diesem Zusammenhang ist es auch besonders vorteilhaft, wenn die bogenförmigen Abschnitte innerhalb einer Gruppe bezüglich der Umfangsrichtung abwechselnd orientierte Bögen aufweisen.

Bei einer alternativen Ausführungsform können die bogenförmigen Abschnitte innerhalb einer Gruppe bezüglich der Umfangsrichtung auch gleich orientierte Bögen aufweisen. Es wird von der jeweiligen Position des Profilelementes im Laufstreifen und von der sonstigen Ausführung des Laufstreifens, beispielsweise auch den Eigenschaften der verwendeten Kautschukmischung, abhängen, welche Ausführungsvariante erfindungsgemäßer Einschnitte besonders vorteilhaft ist.

Der die Quersteifigkeit des jeweiligen Profilelementes bewirkende Verbindungsabschnitt zwischen den Radialabschnitten der bogenförmigen Abschnitte kann unter einem Winkel von 20° bis 80° zur radialen Richtung verlaufen.

Für einen optimalen Abstützungseffekt ist es ferner vorteilhaft, wenn der Querversatz der Radialabschnitte der bogenförmigen Abschnitte zwischen dem Eineinhalb- und dem Dreifachen der Quererstreckung des jeweiligen Bogens beträgt.

Weitere Merkmale, Vorteile und Einzelheiten der Erfindung werden nun anhand der Zeichnung, die schematisch mehrere Ausführungsbeispiele der Erfindung darstellt, näher beschrieben. Dabei zeigen
Fig. 1 eine Ansicht eines Blockes eines Laufstreifens eines Fahrzeugluftreifens mit einer Ausführungsform der Erfindung,
Fig. 2 und Fig. 3 Radialschnitte durch den Block aus Fig. 1 entlang der Linie II-II,
Fig. 4 und Fig. 5 Ansichten von Blöcken mit weiteren Ausführungsvarianten der Erfindung,

Die Erfindung befasst sich mit einer besonderen Ausführung von Einschnitten 2 in Profilelementen von Laufstreifen für Fahrzeugluftreifen. Die Profilelemente können durch Quernuten voneinander getrennte Blöcke von Blockreihen sein, welche in Umfangsrichtung des Laufstreifens umlaufen. Die Profilelemente können auch in Umfangsrichtung des Laufstreifens umlaufende und beispielsweise durch Sacknuten strukturierte Laufstreifenbänder sein. Die Blockreihen und Laufstreifenbänder sind üblicherweise durch Umfangsnuten, die beispielsweise gerade oder zickzack-förmig verlaufen, voneinander getrennt.

Erfindungsgemäß ausgeführte Einschnitte 2 weisen über ihre Erstreckung eine insbesondere konstante Breite in der Größenordnung von 0,4 mm bis 0,6 mm auf und können in an beliebigen Stellen im Laufstreifen vorgesehenen Profilelementen ausgebildet sein. Die Einschnitte 2 erstrecken sich zumindest im Wesentlichen in Querrichtung des Laufstreifens und weichen daher von der exakten Querrichtung um höchstens 45°, insbesondere um höchstens 30°, ab. Die Einschnitte 2 können, müssen jedoch nicht, bis auf die vorgesehene Profiltiefe reichen, sie können auch abschnittsweise eine geringere Tiefe als die Profiltiefe aufweisen.

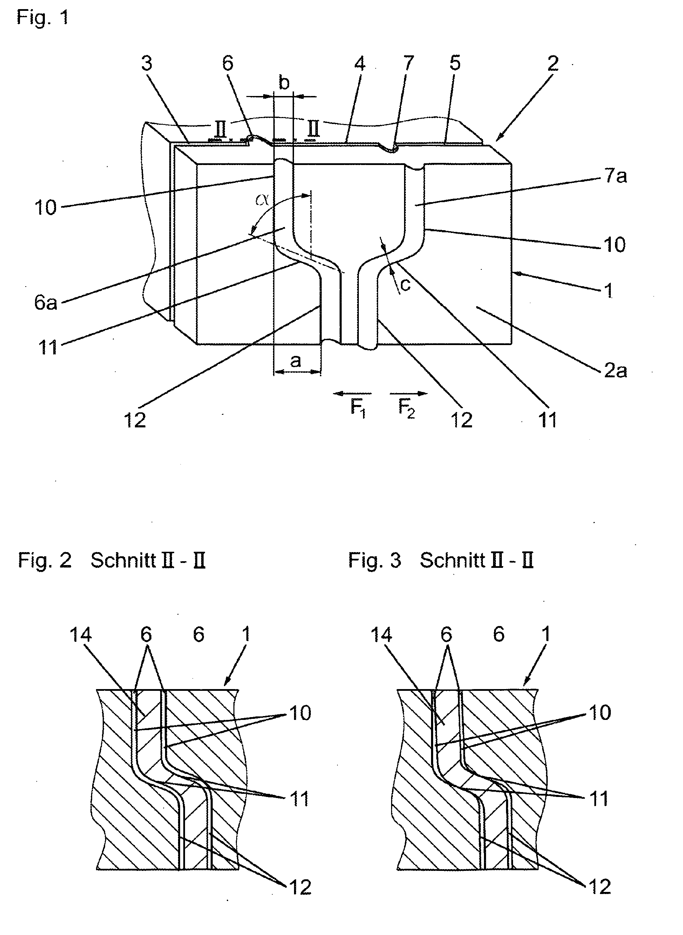

Fig. 1 zeigt eine Ansicht eines Profilblockes 1, welcher entlang eines erfindungsgemäß ausgeführten Einschnittes 2 aufgeschnitten dargestellt ist. Ein zweiter, parallel zum aufgeschnittenen Einschnitt 2 verlaufender Einschnitt 2 ist in einem Abstand von der Vorderansicht des Profilblockes 1 gezeigt. In Fig. 1 ist daher die eine, den Einschnitt 2 begrenzende Wand 2a dargestellt, die zweite, dieser gegenüberliegende und nicht gezeigte Wand ist komplementär zu dieser ausgeführt, sodass sich ein Einschnitt 2 konstanter Breite ergibt. In Draufsicht betrachtet weist der Einschnitt 2 drei gerade verlaufende Einschnittabschnitte 3, 4, 5 auf, wobei zwischen dem mittleren Abschnitt 4 und den beiden äußeren Abschnitten 3 und 5 jeweils ein kurzer, in Draufsicht bogenförmig verlaufender Abschnitt 6, 7 vorgesehen ist. Der Bogen des Abschnittes 6, 7 kann beispielsweise ein Kreisbogen, vorzugsweise ein Halbkreis sein. Die beiden bogenförmigen Abschnitte 6, 7 sind bezüglich der Umfangrichtung des Laufstreifens in zueinander entgegengesetzte Richtungen orientiert. Der bogenförmige Abschnitt 6 bildet daher in der gezeigten Wand 2a des Einschnittes 2 eine Vertiefung 6a, der bogenförmige Abschnitt 7 eine entsprechende Erhebung 7a. In radialer Richtung sind die bogenförmigen Abschnitte 6, 7 besonders ausgeführt, indem sie sich aus zwei Radialabschnitten 10, 12 und einem Verbindungsabschnitt 11 zusammensetzen, wobei der erste, an der Peripherie des Profilbockes 1 beginnende Radialabschnitt 10 und der dritte, im Profilblock 1 endende Radialabschnitt 12 in radialer Richtung, senkrecht zur Peripherie des Laufstreifens, oder unter einem Winkel von bis zu 10° zur radialen Richtung verlaufen. Die Radialabschnitte 10, 12 sind gegeneinander in Querrichtung bzw. Erstreckungsrichtung des Einschnittes 2 versetzt, sodass der Verbindungsabschnitt 11 unter einem Winkel α, welcher zwischen 20° und 80° gewählt wird, zur radialen Richtung verläuft. Die Übergänge zwischen den einzelnen Abschnitten 10, 11 und 12 werden insbesondere gerundet ausgeführt. Der Versatz a der beiden Radialabschnitte 10, 12 in Querrichtung beträgt zwischen dem Eineinhalb- bis Dreifachen der Quererstreckung b der bogenförmigen Abschnitte 6, 7. Der Verbindungsabschnitt 11 bedingt daher zwei Knicke im Tiefenverlauf der in Draufsicht bogenförmigen Abschnitte 6, 7 und weist eine Breite c auf, die höchstens der Abmessung b entspricht und bis zu 30 % von b betragen kann. Wie Fig. 1 zeigt sind die in Draufsicht bogenförmigen Abschnitte 6, 7 derart ausgeführt, dass der gegenseitige Versatz ihrer Radialabschnitte 10, 12 gegensinnig zueinander erfolgt, sodass die Radialabschnitte 12 voneinander geringer beabstandet sind als die Radialabschnitte 10.

Die Wirkung der bogenförmigen Abschnitte 6, 7 beim Einwirken von Querkräften auf den Profilblock 1 wird nun anhand der Fig. 2 und 3 näher erläutert. Fig. 2 und 3 zeigen jeweils einen radialen Schnitt entlang der Linie II-II der Fig. 1 durch den Profilblock 1 im Bereich des bogenförmigen Abschnittes 6 des Einschnittes 2. Zu erkennen sind der in den bogenförmigen Abschnitt 6 hineinreichende Gummiteil 14 und die Einschnittteile seitlich des Gummiteils 14, wobei Fig. 2 den unbelasteten Zustand zeigt. Beim Wirken einer Querkraft in Richtung des Pfeils F₁ in Fig. 1 schließt sich der Einschnitt 2 im Bereich des Verbindungsabschnittes 11 unter einem gegenseitigen Abstützen des Gummiteils 14 am benachbarten Gummi des Profilblockes 1 (Fig. 3). Ein analoger Abstützeffekt trifft beim zweiten bogenförmigen Abschnitt 7 dann auf, wenn eine Querkraft in Richtung des Pfeiles F₂ in Fig 1 wirkt.

Bei einer nicht dargestellten Variante der in Fig. 1 gezeigten Ausführungsform können die Radialabschnitte 10, 12 der bogenförmigen Abschnitte 6, 7 derart angeordnet sein, dass die äußeren Radialabschnitte 10 einen geringeren gegenseitigen Abstand aufweisen als die inneren Radialabschnitte 12.

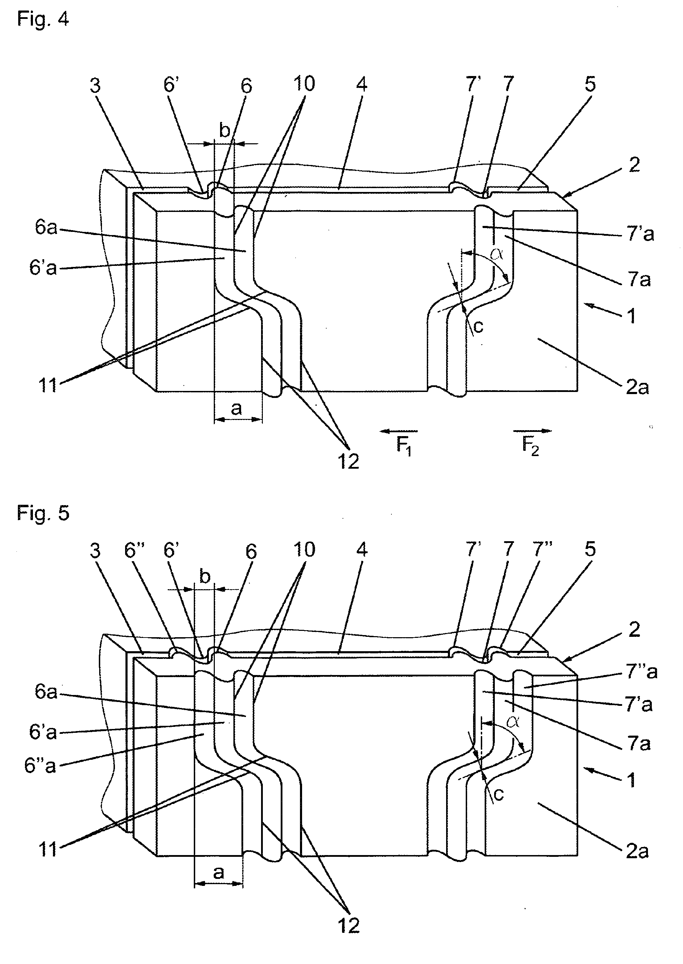

Die in Fig. 4 im Profilblock 1 vorgesehenen Einschnitte 2 weisen in Draufsicht ebenfalls drei gerade verlaufende Einschnittabschnitte 3, 4 und 5 auf, wobei zwischen dem mittleren Abschnitt 4 und den beiden äußeren Abschnitten 3 und 5 jeweils paarweise bogenförmige Abschnitte 6, 6' und 7, 7' vorgesehen sind, derart, dass die beiden Abschnitte 6, 6' und 7, 7' in Draufsicht jeweils entlang eines S bzw. einer Welle mit einer Wellenlänge verlaufen. In der aufgeschnittenen Frontansicht des Profilblockes 1 sind daher jeweils eine Vertiefung 6a neben einer Erhebung 6'a und eine Erhebung 7a neben einer Vertiefung 7'a angeordnet. In der radialen Richtung des Profilblockes 1 betrachtet setzen sich die bogenförmigen Abschnitte 6, 6' und 7, 7' jeweils aus zwei Radialabschnitten 10, 12 und einem Verbindungsabschnitt 11 zusammen. Der Verlauf der Radialabschnitte 10, 12 und der Verbindungsabschnitte 10 ist für die jeweils paarweise zusammengehörenden Abschnitte 6, 6' und 7, 7' analog zu Fig. 1. Die Verbindungsabschnitte 11 der Abschnitte 6, 6' verlaufen gegensinnig zu den Verbindungsabschnitten 11 der Abschnitte 7, 7', ebenfalls analog zu Fig. 1. Bezüglich der Größe des Winkels α, der Abmessungen bzw. gegenseitigen Beziehungen der Abstände a, b und c gelten die oben erwähnten Ausführungen. Auch bei dieser Ausführungsvariante erfolgt eine gegenseitige Abstützung der Einschnittwände beim Wirken von Querkräften in Richtung der Pfeile F₁ und F₂.

Fig. 5 zeigt eine Ausführungsvariante, bei der zwischen dem mittleren Abschnitt 4 des Einschnittes 2 und den beiden äußeren Abschnitten 3, 5 jeweils drei unmittelbar ineinander übergehende bogenförmige Abschnitte 6, 6', 6" und 7', 7, 7" vorgesehen sind. Die Aufeinanderfolge der bogenförmigen Abschnitte 6, 6', 6" und 7', 7, 7" ergibt in Draufsicht eine Wellenform. In der Frontansicht des aufgeschnittenen Profilblockes 1 sind daher in der dargestellten Wand 2a jeweils zwei Vertiefungen 6'a, 6"a, sowie 7'a, 7"a vorgesehen, zwischen welchen jeweils eine Erhebung 6a, 7a verläuft. In radialer Richtung setzen sich sämtliche bogenförmigen Abschnitte 6, 6', 6" und 7', 7, 7" jeweils parallel zueinander aus Radialabschnitten 10, 12 zusammen, welche über einen Verbindungsabschnitt 11, der unter einem Winkel α relativ zur radialen Richtung verläuft, miteinander verbunden sind. Bezüglich der Größen des Winkels α und der Abmessungen a, b und c gelten die obigen Angaben.

Bei sämtlichen Ausführungsformen kann die gegenseitige Anordnung der einen Gruppe von zusammengehörenden bogenförmigen Abschnitten gegenüber der zweiten Gruppe von zusammengehörenden Abschnitten derart erfolgen, dass die äußeren Radialabschnitte jene sind, die einen geringeren Abstand zueinander aufweisen als die inneren Radialabschnitte. Es ist eine Vielzahl weiterer Variationen erfindungsgemäß ausgeführter Einschnitte möglich, insbesondere kann eine Gruppe von bogenförmigen Abschnitten mehr als drei Abschnitte aufweisen und es können mehr als zwei Gruppen von bogenförmigen Abschnitten in einem Einschnitt, je nach Länge desselben, vorgesehen sein. Möglich ist es auch, in Einschnitten nur einen erfindungsgemäß gebogenen Abschnitt oder eine einzige Gruppe von Abschnitten vorzusehen.

### Bezugszeichenliste

1......... Profilblock
2......... Einschnitt
2a ..... Wand
3 ..... Abschnitt
4 ..... Abschnitt
5 ..... Abschnitt
6......... bogenförmiger Abschnitt
6' ..... bogenförmiger Abschnitt
6a ..... Vertiefung
6'a ..... Erhebung
6"a.....Vertiefung
7......... bogenförmiger Abschnitt
7' ..... bogenförmiger Abschnitt
7a ..... Erhebung
7'a......Vertiefung
7"a..... Erhebung
10 ..... Radialabschnitt
11....... Verbindungsabschnitt
12 ..... Radialabschnitt
14 ..... Gummiteil

a......... Versatz
b......... Bogenerstreckung
c ..... Bogenerstreckung

## Patentansprüche

1. Fahrzeugluftreifen mit einem Laufstreifen mit Profilelementen (1) mit jeweils zumindest einem im Wesentlichen in Querrichtung verlaufenden Einschnitt (2), welcher in Draufsicht eine Kombination aus einem gerade verlaufenden Abschnitt (3, 4, 5) mit zumindest einem in Draufsicht bogenförmig verlaufenden Abschnitt (6, 6', 6"; 7', 7, 7") aufweist, wobei sich der Verlauf des Einschnittes (2) in radialer Richtung, in Abhängigkeit vom Abstand zur Peripherie des Laufstreifens, ändert,
**dadurch gekennzeichnet,**
**dass** der in Draufsicht bogenförmige Abschnitt (6, 6', 6"; 7', 7, 7") in radialer Richtung einen zweifach geknickten Verlauf mit drei Abschnitten (10, 11, 12) aufweist, von welchen der erste und der dritte Abschnitt (10, 12) zumindest im Wesentlichen in radialer Richtung verlaufen und über den zwischen ihnen verlaufenden Verbindungsabschnitt (11) lediglich in der Erstreckungsrichtung des Einschnittes (2) gegeneinander versetzt sind.

2. Fahrzeugluftreifen nach Anspruch 1, **dadurch gekennzeichnet, dass** der Einschnitt (2) zumindest einen von einem anderen bogenförmigen Abschnitt (6) beabstandeten, weiteren, in Draufsicht bogenförmigen Abschnitt (7) aufweist, dessen radial innerer Abschnitt (12) zum radial inneren Abschnitt (12) eines anderen bogenförmigen Abschnittes (6) in die andere Erstreckungsrichtung des Einschnittes (2) versetzt ist.

3. Fahrzeugluftreifen nach Anspruch 2, **dadurch gekennzeichnet, dass,** in Draufsicht betrachtet, die Bögen von zwei in der Erstreckungsrichtung des Einschnittes (2) voneinander beabstandeten Abschnitten (6, 7) in entgegengesetzte Umfangsrichtungen weisen.

4. Fahrzeugluftreifen nach einem der Ansprüche 1 bis 3, **dadurch gekennzeichnet, dass** der Einschnitt (2) zumindest eine Gruppe aus zumindest zwei in Draufsicht bogenförmigen Abschnitten (6, 6', 6"; 7', 7, 7") aufweist, wobei die bogenförmigen Abschnitte (6, 6', 6"; 7', 7, 7") innerhalb einer Gruppe in der Erstreckungsrichtung des Einschnittes (2) unmittelbar aneinander anschließen und in radialer Richtung übereinstimmend verlaufen.

5. Fahrzeugluftreifen nach Anspruch 4, **dadurch gekennzeichnet, dass** die bogenförmigen Abschnitte (6, 6', 6"; 7', 7, 7") innerhalb einer Gruppe bezüglich der Umfangsrichtung abwechselnd orientierte Bögen aufweisen.

6. Fahrzeugluftreifen nach Anspruch 4, **dadurch gekennzeichnet, dass** die bogenförmigen Abschnitte innerhalb einer Gruppe bezüglich der Umfangsrichtung gleich orientierte Bögen aufweisen.

7. Fahrzeugluftreifen nach einem der Ansprüche 1 bis 6, **dadurch gekennzeichnet, dass** der Verbindungsabschnitt (11) zwischen den Radialabschnitten (10, 12) der bogenförmigen Abschnitte (6, 6', 6"; 7', 7, 7") unter einem Winkel (α) von 20° bis 80° zur radialen Richtung verläuft.

8. Fahrzeugluftreifen nach einem der Ansprüche 1 bis 7, **dadurch gekennzeichnet, dass** der Querversatz (a) der Radialabschnitte (10, 12) der bogenförmigen Abschnitte (6, 6', 6"; 7, 7', 7") zwischen dem Eineinhalb- und dem Dreifachen der Quererstreckung (b) des Bogens beträgt.

## Claims

1. Pneumatic vehicle tyre with a tread rubber with profile elements (1) each having at least one substantially transversely running sipe (2), which in plan view comprises a combination of a portion (3, 4, 5) following a straight path with at least one portion (6, 6', 6''; 7', 7, 7'') following an arcuate path in plan view, the path followed by the sipe (2) in the radial direction changing on the basis of the distance from the periphery of the tread rubber, **characterized in that** the portion (6, 6', 6''; 7', 7, 7'') that is arcuate in plan view has in the radial direction a doubly bent path comprising three portions (10, 11, 12), of which the first and third portions (10, 12) run at least substantially radially and are merely offset with respect to each other in the direction of extent of the sipe (2) over the connecting portion (11) running between them.

2. Pneumatic vehicle tyre according to Claim 1,
**characterized in that** the sipe (2) has at least one further portion (7) that is arcuate in plan view, which is at a distance from another arcuate portion (6) and the radially inner portion (12) of which is offset in the other direction of extent of the sipe (2) in relation to the radially inner portion (12) of another arcuate portion (6).

3. Pneumatic vehicle tyre according to Claim 2,
**characterized in that,** when seen in plan view, the arcs of two portions (6, 7) that are at a distance from each other in the direction of extent of the sipe (2) face in opposite circumferential directions.

4. Pneumatic vehicle tyre according to one of Claims 1 to 3, **characterized in that** the sipe (2) comprises at least one group of at least two portions (6, 6', 6''; 7', 7, 7'') that are arcuate in plan view, the arcuate portions (6, 6', 6''; 7', 7, 7'') within a group directly adjoining one another in the direction of extent of the sipe (2) and running coincidingly in the radial direction.

5. Pneumatic vehicle tyre according to Claim 4,
**characterized in that** the arcuate portions (6, 6', 6''; 7', 7, 7'') within a group comprise arcs that are oriented alternately with respect to the circumferential direction.

6. Pneumatic vehicle tyre according to Claim 4,
**characterized in that** the arcuate portions within a group comprise arcs that are oriented identically with respect to the circumferential direction.

7. Pneumatic vehicle tyre according to one of Claims 1 to 6, **characterized in that** the connecting portion (11) between the radial portions (10, 12) of the arcuate portions (6, 6', 6''; 7', 7, 7'') run at an angle (α) of 20° to 80° in relation to the radial direction.

8. Pneumatic vehicle tyre according to one of Claims 1 to 7, **characterized in that** the transverse offset (a) of the radial portions (10, 12) of the arcuate portions (6, 6', 6''; 7', 7, 7'') is between one and a half and three times the transverse extent (b) of the arc.

## Revendications

1. Bandage pneumatique pour roue de véhicule, qui présente une bande de roulement dotée d'éléments profilés (1) qui présentent tous au moins une entaille (2) qui s'étend essentiellement dans la direction transversale et qui, vue en plan, présente une combinaison d'un tronçon (3, 4, 5) qui s'étend en ligne droite et d'au moins un tronçon (6, 6', 6"; 7', 7, 7") qui s'étend en arc de cercle lorsqu'il est vu en plan, le déroulement de l'entaille (2) dans la direction radiale variant en fonction de sa distance par rapport à la périphérie de la bande de roulement,
**caractérisé en ce que**
le tronçon (6, 6', 6"; 7', 7, 7") qui présente la forme d'un arc de cercle lorsqu'il est vu en plan présente dans la direction radiale un déroulement à double coude qui présente trois parties (10, 11, 12) parmi lesquelles la première et la troisième partie (10, 12) s'étendent au moins essentiellement dans la direction radiale et sont décalées l'une par rapport à l'autre, uniquement dans la direction de l'extension de l'entaille (2), par leur partie de liaison (11) qui s'étend entre elles.

2. Bandage pneumatique pour roue de véhicule selon la revendication 1, **caractérisé en ce que** l'entaille (2) présente au moins un autre tronçon (7) qui présente la forme d'un arc de cercle lorsqu'il est vu en plan, qui est situé à distance d'un autre tronçon (6) en forme d'arc de cercle et dont la partie (12) située radialement à l'intérieur est décalée par rapport à la partie intérieure (12) d'un autre tronçon (6) en forme d'arc de cercle dans la direction d'extension de l'entaille (2).

3. Bandage pneumatique pour roue de véhicule selon la revendication 2, **caractérisé en ce que** vus dans une vue en plan, les arcs de cercle de deux tronçons (6, 7) situés à distance l'un de l'autre dans la direction d'extension de l'entaille (2) sont orientés dans des directions périphériques opposées.

4. Bandage pneumatique pour roue de véhicule selon l'une des revendications 1 à 3, **caractérisé en ce que** l'entaille (2) présente au moins un groupe constitué d'au moins deux tronçons (6, 6', 6"; 7', 7, 7") qui présentent la forme d'un arc de cercle lorsqu'ils sont vus en plan, les tronçons (6, 6', 6"; 7', 7, 7") en forme d'arc de cercle situés à l'intérieur d'un groupe se raccordant directement l'un à l'autre dans la direction de l'extension de l'entaille (2) et s'étendant en correspondance dans la direction radiale.

5. Bandage pneumatique pour roue de véhicule selon la revendication 4, **caractérisé en ce que** les tronçons (6, 6', 6"; 7', 7, 7") en forme d'arc de cercle situés à l'intérieur d'un groupe présentent des arcs orientés de manière alternée par rapport à la direction périphérique.

6. Bandage pneumatique pour roue de véhicule selon la revendication 4, **caractérisé en ce que** les tronçons en forme d'arc de cercle situés à l'intérieur d'un groupe présentent des arcs orientés dans la même direction par rapport à la direction périphérique.

7. Bandage pneumatique pour roue de véhicule selon l'une des revendications 1 à 6, **caractérisé en ce que** le tronçon de liaison (11) situé entre les parties radiales (10, 12) des tronçons (6, 6', 6"; 7', 7, 7") en forme d'arc de cercle s'étend sous un angle (α) de 20° à 80° par rapport à la direction radiale.

8. Bandage pneumatique pour roue de véhicule selon l'une des revendications 1 à 7, **caractérisé en ce que** le décalage transversal (a) des parties radiales (10, 12) des tronçons (6, 6', 6"; 7', 7, 7") en forme d'arc de cercle représente entre une fois et demie et trois fois l'extension transversale (b) de l'arc.
